# EUROPÄISCHE PATENTSCHRIFT

(11) **EP 0 808 650 B1**
(45) Veröffentlichungstag und Bekanntmachung des Hinweises auf die Patenterteilung: **02.05.2001**
(21) Anmeldenummer: 97104824.4
(22) Anmeldetag: 21.03.1997
(51) Int. Cl.: B01D 53/04, B01D 53/08, B01J 20/20

(54) **Verfahren zum Abtrennen von Schadstoffen aus Abgasen**
Process for removing pollutants from exhaust gases
Procédé d'élimination de polluants dans les gaz d'échappement

(30) Priorität: 18.05.1996 DE 19620129
(43) Veröffentlichungstag der Anmeldung: 26.11.1997
(73) Patentinhaber: mg technologies ag, 60325 Frankfurt am Main (DE)
(72) Erfinder: Rolke, Dietrich, Dr., 65719 Hofheim (DE); Hohmann, Volker, 63477 Maintal (DE); Fell, Hans-Jochen, 61352 Bad Homburg (DE)
(74) Vertreter: Revesz, Veronika

(56) Entgegenhaltungen:
- EP-A- 0 479 350
- WO-A-94/17900
- DE-A- 4 339 072
- DE-A- 4 339 777
- US-A- 5 308 590

## Beschreibung

Die Erfindung betrifft ein Verfahren zum Abtrennen von Schadstoffen aus einem Abgasstrom, der durch eine Schüttung eines körnigen Adsorptionsmittels geleitet wird, welches aus der Mischung eines körnigen, kohlenstoffreichen Materials, nämlich Aktivkohle, Aktivkoks oder Braunkohlenkoks, und eines körnigen Inertmaterials besteht, wobei die Temperaturen in der Schüttung 20 bis 200°C betragen, während der Gasstrom hindurchgeleitet wird, und die Schüttung in einem Behälter ein Festbett oder Wanderbett bildet, wobei das Bett vertikal oder horizontal vom Abgas durchströmt wird. Bei den Schadstoffen handelt es sich vorzugsweise um Quecksilber oder Quecksilberverbindungen, aber auch um polyzyklische oder mehrkernige aromatische Kohlenwasserstoffe, insbesondere Dioxine und Furane sowie auch um andere Schwermetalle und/oder Schwermetallverbindungen.

Ein Verfahren der eingangs genannten Art ist in DE-A-4339777 beschrieben, die Gasreinigung im Flugstromverfahren mittels Aktivkoks und Inertmaterial kennt man z.B. aus WO-A-94/17900 und die Verwendung der Wirbelschicht ist aus EP-A-0479350 bekannt. Für das Entfernen von metallischem Quecksilber aus Gasen werden in den US-Patenten 4 101 631, 4 500 327 und 4 814 152 Zeolithe oder Aktivkohle verwendet, die mit Schwefel imprägniert sind. Das aus DE-A-4326450 bekannte Verfahren arbeitet mit aluminiumarmen Zeolithen, die ebenfalls mit Schwefel imprägniert sein können.

Gase verschiedener Herkunft, insbesondere Abgase von Abfallverbrennungsanlagen, enthalten u.a. Staub, unverbrannte Kohlenwasserstoffe, Halogenwasserstoffe, sowie Schwefeloxide, Stickstoffoxide, Schwermetalle und Schwermetallverbindungen, aber auch Dioxine und Furane. Zur Abscheidung dieser Stoffe werden verschiedene Reinigungsverfahren eingesetzt. Insbesondere für die Abscheidung von Quecksilber und Quecksilberverbindungen sowie Dioxinen und Furanen ist üblicherweise eine zusätzliche Abscheidestufe als letzte Stufe vor dem Kamin erforderlich. Hierfür kann man kohlenstoffhaltige Pulver oder Schüttungen aus körniger Aktivkohle oder körnigem Aktivkoks verwenden. Nachteilig an diesen kohlenstoffhaltigen Materialien ist die latente Brandgefahr, wobei auch die Selbstentzündung möglich ist. Außerdem führt die Co-Adsorption von anderen Gasbestandteilen, wie z.B. SO₂-Spuren oft zu schnellen Erschöpfung und Versottung oder Verbackung des Adsorptionsmittels, wodurch es häufig gewechselt werden muß.

Der Erfindung liegt die Aufgabe zugrunde, beim eingangs genannten Verfahren dem Problem des Versottens und Verbackens in der Schüttung zu begegnen. Erfindungsgemäß wird die Aufgabe dadurch gelöst, dass das Inertmaterial hydrophob ist und aus silikatischem Gestein, Bimsstein, Lava, Schlacken, Verglasungsrückständen oder Feinkies besteht, dass das Schüttgewicht des Inertmaterials das 0,8- bis 3-fache des Schüttgewichts des kohlenstoffreichen Materials beträgt, dass das kohlenstoffreiche Material und das Inertmaterial Korngrößen im Bereich von 0,5 bis 10 mm aufweisen und dass 5 bis 80 Gew. -% der Schüttung aus kohlenstoffreichem Material bestehen. Die Beimischung des Inertmaterials ermöglicht lange Standzeiten und insbesondere auch hohe Abscheideleistungen für Schwermetalle, Dioxine und Furane. Im Dauerbetrieb treten weder Entzündungs- noch Selbsterwärmungserscheinungen auf, auch unterbleiben Versottung und Verbackungen. Frei werdende Adsorptionswärme wird vom Inertmaterial aufgenommen und abgeleitet, so dass kein Hitzestau entsteht.

Es hat sich als zweckmäßig erwiesen, das Gas mit einer Leerrohrgeschwindigkeit von 0,1 bis 0,5 m/sec durch die Schüttung zu leiten. Die Verweilzeit des Gases in der Schüttung ist von Konzentration der abzuscheidenden Stoffe abhängig und liegt zumeist im Bereich von 0,5 bis 5 Sekunden.

Das zu verwendende kohlenstoffreiche Material, Aktivkohle, Aktivkoks oder Braunkohlenkoks, kann auch imprägniert sein, z.B. mit Schwefel oder Schwefelverbindungen. Der Anteil des kohlenstoffreichen Materials in der Schüttung beträgt 5 bis 80 Gew. -% und vorzugsweise 20 bis 75 Gew. -%. Während der Gasstrom durch die Schüttung geleitet wird, liegen die Temperaturen bei 20 bis 200°C. Das Inertmaterial ist hydrophob, die Wasseraufnahme des Inertmaterials liegt bei einem Gas mit 65% relativer Feuchte vorzugsweise unter 15 Gew. -% im Gleichgewichtszustand.

Das kohlenstoffreiche Material, das für die Schüttung verwendet wird, und auch das Inertmaterial haben Körnungen im Bereich von 0,5 bis 10 mm. Vorzugsweise ist das Inertmaterial etwas grobkörniger, wobei mindestens 80 Gew. -% Körnungen im Bereich von 1 bis 6 mm aufweisen.

Bei unterschiedlichen Mischungsverhältnissen wurde die Hg-Abscheidung in erfindungsgemäßen Schüttungen gemessen. Bei einem Anteil von nur 30 Gew. -% Formaktivkohle und nur einer Sekunde Gasverweilzeit konnten Abscheidegrade z.B. für Quecksilberverbindungen oder für metallisches Quecksilber größer 99% über längere Zeit nachgewiesen werden. Somit braucht die Mischung nur eine geringe Menge an kohlenstoffhaltigem Material zu enthalten. Die Mischung hat außerdem den Vorteil, dass Abscheideleistungen durch Einstellung des Mischungsverhältnisses in weiten Grenzen variiert werden. Dadurch ergibt sich auch im Hinblick auf die Schichtdicke und den davon direkt abhängigen Gasdruckverlust eine hohe Flexibilität. Außerdem läßt der Einsatz grobkörniger Materialien, z.B. Formaktivkohle, auch eine zusätzliche Schwefelimprägnierung zu, um noch höhere Abscheideleistungen oder auch die selektive Abscheidung von elementar vorliegenden Schwermetallen hohen Dampfdruckes, vor allem Quecksilber, zu erzielen.

Solch eine Festbettschüttung als letzte Stufe vor dem Kamin kann somit auch die Aufgabe eines Sicherheitsfilters im Falle von Durchschlägen aus der vorgeschalteten Abgasreinigung für alle Schadstoffe erfüllen und fungiert auch als Filter für Reststaub. Das Inertmaterial nimmt nur geringe Mengen SO₂ auf bzw. bildet nur wenige Prozente an Schwefelsäure. Durch das Speichervermögen der Aktivkohle einerseits und die trennende Wirkung des Inertmaterials andererseits wird eine Durchfeuchtung der Schüttung und das Verkleben durch Versottung vermieden. Es zeigte sich, daß selbst bei mehr als 70 Gew.-% Schwefelsäurebeladung des Aktivkohleanteils kein Versottungseffekt auftrat. Bei Verwendung von reiner Aktivkohle oder Aktivkoks setzt die Versottung schon bei wesentlich geringeren Säurebeladungen ein.

Die Bundesanstalt für Materialforschung und -prüfung in Berlin führte Untersuchungen an Mischungen von Aktivkohle und Vulkangestein (Lava) durch, wobei Gewichtsverhältnisse von 70:30, 50:50 und 30:70 vorlagen. Dabei wurden keine Anzeichen für das Entstehen gefährlicher Temperaturentwicklungen mit der Möglichkeit der Selbstentzündung gefunden.

### Beispiel 1:

In einem Langzeitversuch von 18 Monaten Dauer wird das Abgas einer großtechnischen Abfallverbrennungsanlage durch einen Adsorptionsfilter geleitet, dessen Festbett eine Mischung aus 30 Gew.-% Aktivkohle und 70 Gew.-% Lava ist. Am Ende des Versuchs liegt die Abscheideleistung für Hg und Hg-Verbindungen unverändert bei mehr als 95%, es wurden keine Versottung, kein Temperaturanstieg und keine CO-Entwicklung beobachtet.

### Beispiel 2:

Im Laborversuch besteht die Schüttung aus 70 Gew.-% Bimsstein mit Körnung 2-6 mm und 30 Gew.-% Aktivkohle von etwa 4mm Korngröße. Aufwärts durch die Schüttung wird HgCl₂-haltige Luft geleitet, nach 700 Stunden wird die HgCl₂-Konzentration verringert.

| | |
|---|---|
| Schüttungsdurchmesser | 36 mm |
| Schüttungshöhe | 360 mm |
| Temperatur in der Schüttung | 80 °C |
| Temperatur des Gases | 60 °C |
| Gasgeschwindigkeit, effektiv | 30 cm/sec. |

## Patentansprüche

1. Verfahren zum Abtrennen von Schadstoffen aus einem Abgasstrom, der durch eine Schüttung eines körnigen Adsorptionsmittels geleitet wird, welches aus der Mischung eines körnigen, kohlenstoffreichen Materials, nämlich Aktivkohle, Aktivkoks oder Braunkohlenkoks, und eines körnigen Inertmaterials besteht, wobei die Temperaturen in der Schüttung 20 bis 200°C betragen, während der Gasstrom hindurchgeleitet wird, und die Schüttung in einem Behälter ein Festbett oder Wanderbett bildet, wobei das Bett vertikal oder horizontal vom Abgas durchströmt wird, dadurch gekennzeichnet, dass das Inertmaterial hydrophob ist und aus silikatischem Gestein, Bimsstein, Lava, Schlacken, Verglasungsrückständen oder Feinkies besteht, dass das Schüttgewicht des Inertmaterials das 0,8 - bis 3-fache des Schüttgewichts des kohlenstoffreichen Materials beträgt, dass das kohlenstoffreiche Material und das Inertmaterial Korngrößen im Bereich von 0,5 bis 10 mm aufweisen und dass 5 bis 80 Gew. -% der Schüttung aus kohlenstoffreichem Material bestehen.

2. Verfahren nach Anspruch 1, dadurch gekennzeichnet, dass Schwermetalle und/oder Schwermetallverbindungen und/oder polyzyklische oder mehrkernige aromatische Kohlenwasserstoffe, insbesondere Dioxine und Furane aus dem Gasstrom entfernt werden.

3. Verfahren nach Anspruch 1 oder 2, dadurch gekennzeichnet, dass elementare Schwermetalle aus einem Abgasstrom abgeschieden werden, wobei man kohlenstoffreiches Material verwendet kohlenstoffreiches Material verwendet, das mindestens teilweise mit Schwefel imprägniert ist.

## Claims

1. A process for separating off pollutants from a stream of exhaust gas which is passed through a bed of a granular adsorbent which consists of a mixture of a granular, carbon-rich material, namely activated carbon, activated coke or brown-coal coke, and a granular inert material, the temperatures in the bed being 20 to 200°C, while the gas stream is passed through, and the bed forms a fixed bed or moving bed in a container, the exhaust gas flowing vertically or horizontally through the bed, characterised in that the inert material is hydrophobic and consists of siliceous rock, pumice, lava, slags, vitrification residues or fine gravel, that the bulk density of the inert material is 0.8 to 3 times the bulk density of the carbon-rich material, that the carbon-rich material and the inert material have grain sizes in the range from 0.5 to 10 mm and that 5 to 80% by weight of the bed consists of carbon-rich material.

2. A process according to Claim 1, characterised in that heavy metals and/or heavy-metal compounds and/or polycyclic or polynuclear aromatic hydrocarbons, in particular dioxins and furans, are removed from the gas stream.

3. A process according to Claim 1 or 2, characterised in that elemental heavy metals are separated out of an exhaust-gas stream, with carbon-rich material being used which is at least partially impregnated with sulphur.

## Revendications

1. Procédé de séparation de substances polluantes dans un courant d'effluents gazeux qui passe dans un tas d'un agent d'absorption en grains, constitué du mélange d'une matière en grains riche en carbone, à savoir du charbon actif, du coke actif ou du coke de lignite et d'un matériau inerte en grains, les températures dans le tas étant comprises entre 20 et 200°C pendant que le courant gazeux y passe et le tas formant dans une cuve un lit fixe ou un lit mobile, le lit étant traversé verticalement ou horizontalement par l'effluent gazeux, caractérisé en ce que la matière inerte est hydrophobe et est en roche silicatée, en pierre ponce, en lave, en scories, en résidus de vitrification ou en graviers fins, en ce que la densité apparente du matériau inerte représente de 0,8 à 3 fois la densité apparente du matériau riche en carbone, en ce que le matériau riche en carbone et le matériau inerte ont des granulométries de 0,5 à 10 mm et en ce que de 5 à 80 % en poids du tas sont constitués du matériau riche en carbone.

2. Procédé suivant la revendication 1, caractérisé en ce que des métaux lourds et/ou des composés de métaux lourds et/ou des hydrocarbures polycycliques ou aromatiques à plusieurs cycles, notamment des dioxines et des furanes sont éliminés du courant gazeux.

3. Procédé suivant la revendication 1 ou 2, caractérisé en ce que des métaux lourds élémentaires sont séparés du courant d'effluent gazeux en utilisant du matériau riche en carbone qui est imprégné au moins partiellement de soufre.
